# EUROPEAN PATENT APPLICATION

(11) **EP 4 566 928 A1**
(43) Date of publication of application: **11.06.2025**
(21) Application number: 24209225.2
(22) Date of filing: 28.10.2024
(51) Int. Cl.: B62J 6/04, B62J 23/00

(54) **STRADDLED VEHICLE REAR LIGHTS AND COVER**

(30) Priority: 08.12.2023 JP 2023207376
(71) Applicant: Yamaha Hatsudoki Kabushiki Kaisha, Iwata-shi, Shizuoka 438-8501 (JP)
(72) Inventor: OHTA, Mitsuaki, Iwata-shi, 4388501 (JP); SAKATA, Kohei, Iwata-shi, 4388501 (JP)
(74) Representative: Studio Torta S.p.A.

(57) **Abstract**

There is disclosed a taillight unit (3) including a left and right pair of taillights (22, 23), a left and right pair of flashers (24, 25), and a tail cover (27);. the left and right pair of taillights (22, 23) including a first taillight (22) and a second taillight (23); the left and right pair of flashers (24, 25) including a first flasher (24) and a second flasher (25); the tail cover (27) including an upper slope (41) and a lower slope (42); the upper slope (41) including a first opening (41a), through which the first taillight (22) is exposed, and a second opening (41b), through which the second taillight (23) is exposed: the lower slope (42) including a third opening (42a), through which the first flasher (24) is exposed, and a fourth opening (42b), through which the second flasher (25) is exposed; the first taillight (22) being larger in light emitting surface than the first flasher (24).

## Description

### Technical field

The present invention relates to a taillight unit and a straddled vehicle.

### Background Information

A straddled vehicle includes a taillight unit disposed on a vehicle rear side. The taillight unit includes a taillight and a left and right pair of flashers (Japan Laid-open Patent Application Publication No. 2012-240425).

For example, if a conventional straddled vehicle employs a taillight configuration that left and right taillights are provided as a pair of discrete components, the taillights and the flashers are reduced in distance therebetween. Because of this, it is concerned that light emitted from the taillights and that emitted from the flashers interfere with each other, whereby the taillights and the flashers are degraded in visibility. It is an object of the present invention to make the taillight unit compact and simultaneously inhibit degradation in visibility of the taillights and the flashers.

### Description of the invention

A taillight unit according to an aspect of the present invention relates to a taillight unit for a straddled vehicle and includes a left and right pair of taillights, a left and right pair of flashers, and a tail cover. The left and right pair of taillights includes a first taillight and a second taillight. The left and right pair of flashers includes a first flasher and a second flasher. The tail cover is disposed behind the left and right pair of taillights and the left and right pair of flashers. The tail cover includes an upper slope and a lower slope and is shaped to be bent between the upper slope and the lower slope. The upper slope extends to a vehicle front side and a vehicle upper side in a vehicle side view. The upper slope of the tail cover includes a first opening, through which the first taillight is exposed, and a second opening, through which the second taillight is exposed. The second opening is disposed apart from the first opening in a vehicle width direction. The lower slope extends to the vehicle front side and a vehicle lower side in the vehicle side view. The lower slope of the tail cover includes a third opening, through which the first flasher is exposed, and a fourth opening, through which the second flasher is exposed. The third opening is disposed apart from the first opening in a vehicle up-and-down direction. The fourth opening is disposed apart from the third opening in the vehicle width direction. The first taillight is larger in light emitting surface than the first flasher.

In the taillight unit according to the present aspect, the tail cover is shaped to be bent between the upper slope and the lower slope; besides, the left and right pair of taillights is exposed through the first and second openings of the upper slope, while the left and right pair of flashers is exposed through the third and fourth openings of the lower slope. Because of this, when compared to, for instance, a configuration that the left and right pair of taillights and the left and right pair of flashers are provided as four units discrete from each other, the taillight unit can be made efficient in structure, and hence, can be enhanced in design flexibility. Furthermore, even if the left and right pair of taillights and the left and right pair of flashers are disposed close in position to each other, the light from the taillights and that from the flashers can be inhibited from interfering with each other. As a result, the taillight unit can be made compact, and simultaneously, degradation in visibility of the left and right pair of taillights and the left and right pair of flashers can be inhibited.

The left and right pair of taillights is exposed from the upper slope; hence, the left and right pair of taillights is enhanced in visibility when seen from the vehicle rear side. The left and right pair of flashers is exposed from the lower slope unlikely to be cast by external light; hence, the left and right pair of flashers is enhanced in visibility. Furthermore, the first taillight is larger in light emitting surface than the first flasher; hence, even if the first flasher is disposed in a shaded position, the first flasher can be reliably viewed with distinction.

The left and right pair of taillights may include a left and right pair of first lenses. The left and right pair of flashers may include a left and right pair of second lenses. The left and right pair of first lenses and the left and right pair of second lenses may be fixed to be integrated with each other. In this case, the taillight unit can be made further efficient in structure; hence, spatial efficiency can be achieved. Besides, achievement in spatial efficiency results in enhancement in design flexibility of the optical structure of the taillight unit.

Each of the left and right pair of first lenses may have a larger dimension in the vehicle width direction than in the vehicle up-and-down direction in a vehicle rear view. Each of the left and right pair of second lenses may have a larger dimension in the vehicle up-and-down direction than in the vehicle width direction in the vehicle rear view. In this case, the left and right pair of taillights and the left and right pair of flashers are enhanced in visibility.

A straddled vehicle according to another aspect of the present invention includes the taillight unit configured as described above.

Overall, in the taillight unit and the straddled vehicle according to the present invention, the taillight unit can be made compact, and simultaneously, degradation in visibility of the taillights and the flashers can be inhibited. Brief description of the drawings
FIG. 1 is a side view of a straddled vehicle.
FIG. 2 is a rear view of a taillight unit and part of a seat frame.
FIG. 3 is a plan view of the taillight unit and part of the seat frame.
FIG. 4 is a side view of the taillight unit and part of the seat frame.
FIG. 5 is a schematic cross-sectional view of the taillight unit.
FIG. 6 is a schematic cross-sectional view of the taillight unit.
FIG. 7 is a rear view of an outer lens.
FIG. 8 is a rear view of a tail cover.

### Embodiments of the invention

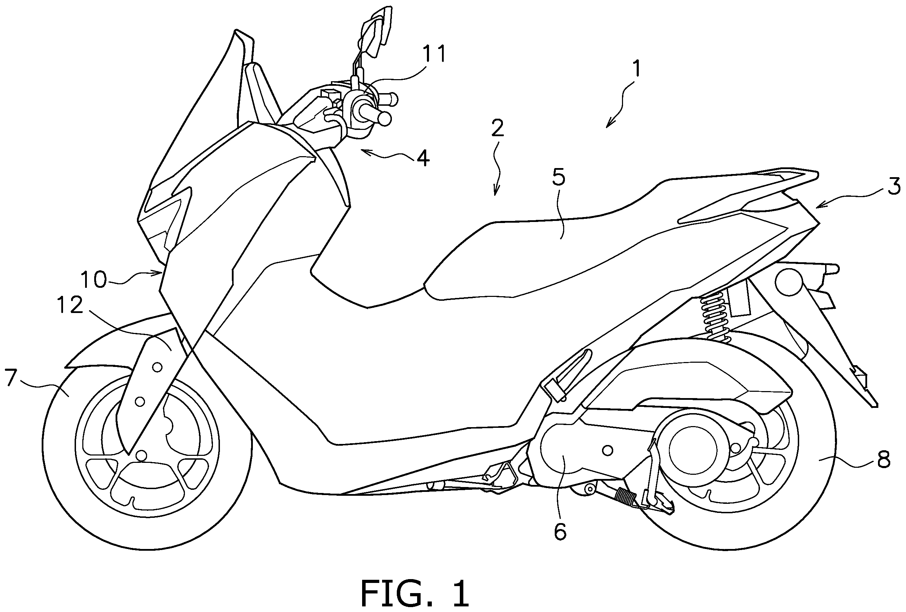

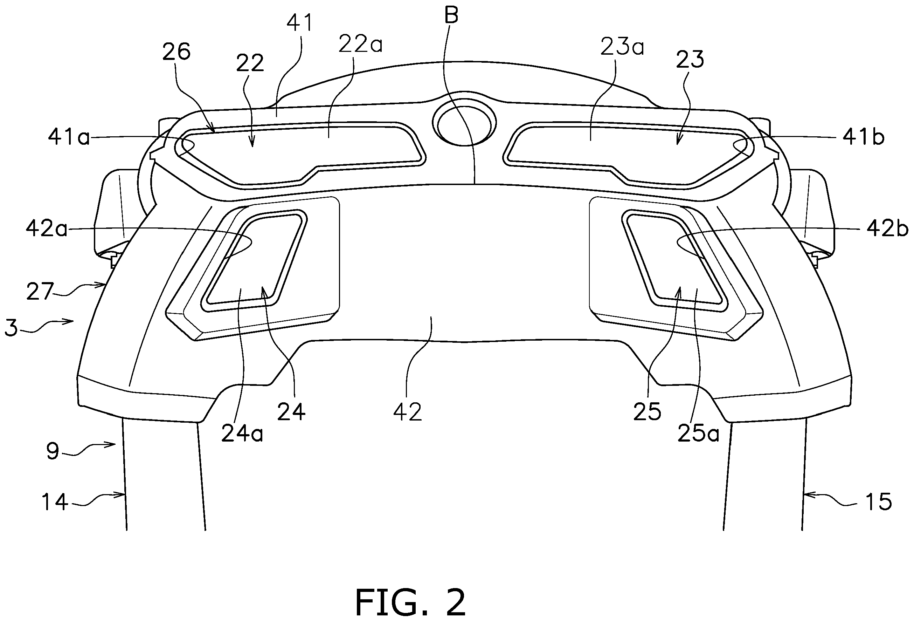

A straddled vehicle according to a preferred embodiment will be hereinafter explained with reference to drawings. FIG. 1 is a side view of a straddled vehicle 1 according to the preferred embodiment. In the present preferred embodiment, the straddled vehicle 1 is a scooter. As shown in FIG. 1, the straddled vehicle 1 includes a vehicle body 2 and a taillight unit 3. The vehicle body 2 includes a steering device 4, a seat 5, a power unit 6, a front wheel 7, a rear wheel 8, a vehicle body frame 9 (see FIG. 2), and a vehicle body cover 10. It should be noted that in the following explanation, the directional terms "right" and "left" are defined as meaning right and left directions seen from a rider seated on the seat 5.

The steering device 4 includes a handle 11 and a front fork 12. The handle 11 is connected to the front fork 12. The handle 11 is operable right and left by the rider. The front fork 12 is connected to the front wheel 7. The seat 5 is disposed behind the steering device 4. The power unit 6 is disposed below the seat 5. The power unit 6 includes, for instance, an internal combustion engine and a transmission. Alternatively, the power unit 6 may include an electric motor. The front wheel 7 is supported by the front fork 12. The rear wheel 8 is rotatably supported by the power unit 6. The rear wheel 8 may be rotatably supported by a swing arm.

As shown in FIGS. 2 to 4, the vehicle body frame 9 includes seat frames 14 and 15. The seat frames 14 and 15 extend in a vehicle back-and-forth direction. The seat frames 14 and 15 are disposed below the seat 5. The seat frames 14 and 15 support the seat 5. The seat frames 14 and 15 are pipe-like members.

The seat frames 14 and 15 are composed of a left seat frame 14 and a right seat frame 15. The left seat frame 14 is disposed on the left side of the right seat frame 15. The left seat frame 14 is apart from the right seat frame 15 in a vehicle width direction. The right seat frame 15 is shaped bilaterally symmetric to the left seat frame 14. A rear part of the left seat frame 14 and that of the right seat frame 15 are coupled to each other by a cross plate 29.

The vehicle body cover 10 covers the vehicle body frame 9 from the surroundings of the vehicle body frame 9. The vehicle body cover 10 is supported by the vehicle body frame 9.

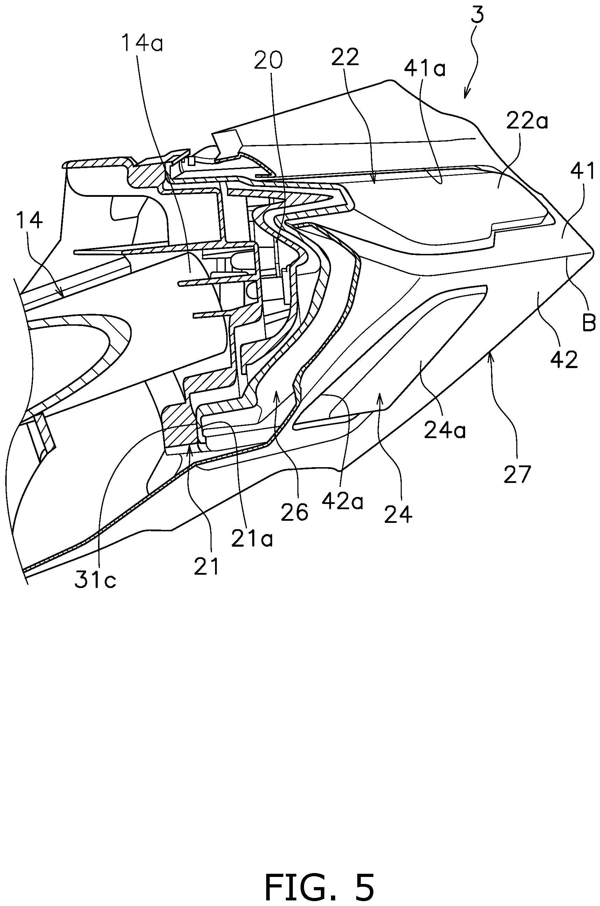

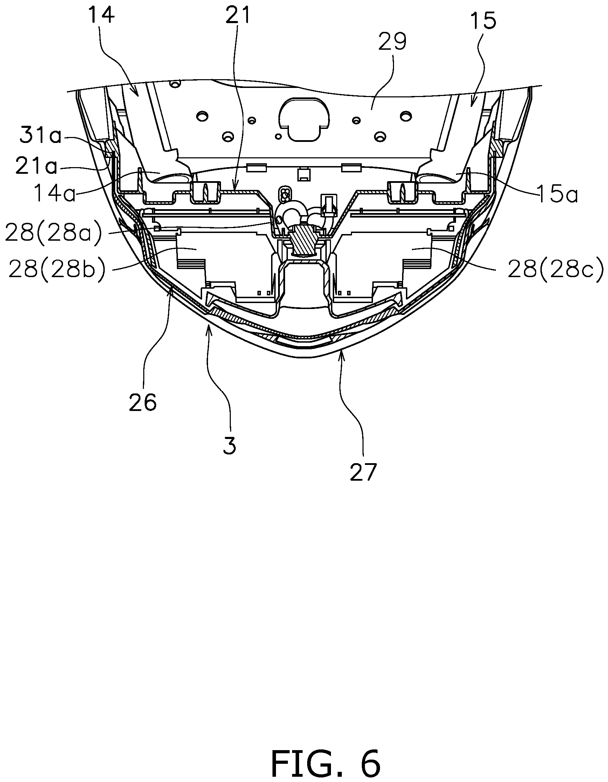

The taillight unit 3 is attached to the vehicle body cover 10. The taillight unit 3 is disposed behind the seat frames 14 and 15. FIG. 5 is a schematic cross-sectional view of the taillight unit 3 cut along a plane oriented orthogonal to the vehicle width direction. FIG. 6 is a schematic cross-sectional view of the taillight unit 3 cut along a plane oriented orthogonal to a vehicle up-and-down direction. In FIGS. 5 and 6, members in part are omitted in illustration. As shown in FIGS. 5 and 6, the taillight unit 3 overlaps with rear ends 14a and 15a of the seat frames 14 and 15 when seen from a vehicle rear side. The rear ends 14a and 15a of the seat frames 14 and 15 are disposed further on an inner side than both vehicle width directional ends of the taillight unit 3 in the vehicle width direction.

The taillight unit 3 includes at least one board 20, a support member 21, a left and right pair of taillights 22 and 23, a left and right pair of flashers 24 and 25, an outer lens 26, a tail cover 27, and a partitioning wall 28.

The at least one board 20 is disposed on the same side as the rear surface of the support member 21. The at least one board 20 is accommodated in a space formed by the support member 21 and the outer lens 26. The at least one board 20 overlaps with the rear ends 14a and 15a of the seat frames 14 and 15 in the vehicle rear view. Each of the at least one board 20 is a printed circuit board, to which a light source (not shown in the drawings) is connected. In the present preferred embodiment, the at least one board 20 is composed of four boards provided in correspondence to the left and right pair of taillights 22 and 23 and the left and right pair of flashers 24 and 25, respectively. The four boards are connected to the left and right pair of taillights 22 and 23 and the left and right pair of flashers 24 and 25, respectively, on a one-to-one basis.

The support member 21 is made of resin. The support member 21 is fixed to, for instance, the cross plate 29. The support member 21 supports the left and right pair of taillights 22 and 23 and the left and right pair of flashers 24 and 25. The support member 21 extends in the vehicle width direction. The support member 21 has a larger dimension in the vehicle width direction than in the vehicle up-and-down direction. The support member 21 is shaped to be recessed to the vehicle rear side in a vehicle plan view. The vehicle width directional ends of the support member 21 are both located further on the front side than a vehicle width directional middle part thereof.

The vehicle width directional ends of the support member 21 are both disposed further on outer sides than the rear ends 14a and 15a of the seat frames 14 and 15 in the vehicle width direction. The support member 21 covers the rear ends 14a and 15a of the seat frames 14 and 15 from the outer sides in the vehicle width direction. The support member 21 overlaps with the rear ends 14a and 15a of the seat frames 14 and 15 in a vehicle side view. The support member 21 overlaps with the rear ends 14a and 15a of the seat frames 14 and 15 in the vehicle plan view.

The support member 21 includes a seal surface 21a. The seal surface 21a is disposed on the same side as the rear surface of the support member 21. The seal surface 21a is shaped along the outer edge of the support member 21. The seal surface 21a has an approximately annular shape as seen from the vehicle rear side. The seal surface 21a is shaped to be recessed to a vehicle front side.

The seal surface 21a comes in contact with the outer lens 26. The seal surface 21a is a part of the support member 21, to which the outer lens 26 is attached. When the outer lens 26 is attached to the seal surface 21a, the space formed by the support member 21 and the outer lens 26 is sealed. The seal surface 21a overlaps with the seat frames 14 and 15 in the vehicle plan view. As shown in FIGS. 5 and 6, the seal surface 21a overlaps with the seat frames 14 and 15 in the vehicle side view. The seal surface 21a does not overlap with the rear ends 14a and 15a of the seat frames 14 and 15 in the vehicle rear view. The rear ends 14a and 15a of the seat frames 14 and 15 are disposed further on the vehicle rear side than at least part of the seal surface 21a. The rear ends 14a and 15a of the seat frames 14 and 15 are disposed further on the vehicle rear side than the vehicle width directional ends of the seal surface 21a.

The left and right pair of taillights 22 and 23 is fixed to the support member 21. The left and right pair of taillights 22 and 23 and the left and right pair of flashers 24 and 25 are integrated in the taillight unit 3. In other words, the left and right pair of taillights 22 and 23 and the left and right pair of flashers 24 and 25 are unitized, and in other words, compose a single unit. Because of this, the left and right pair of taillights 22 and 23 and the left and right pair of flashers 24 and 25 are unitarily attachable to and detachable from the vehicle body 2.

The left and right pair of taillights 22 and 23 is composed of a first taillight 22, a second taillight 23, and a left and right pair of first lenses 22a and 23a. The first taillight 22 is disposed on the left side of the second taillight 23. The first taillight 22 is remote from the second taillight 23 in the vehicle width direction. The second taillight 23 is shaped bilaterally symmetric to the first taillight 22. Each of the first and second taillights 22 and 23 includes a light source, a light guide body, and an inner lens, all of which are not shown in the drawings.

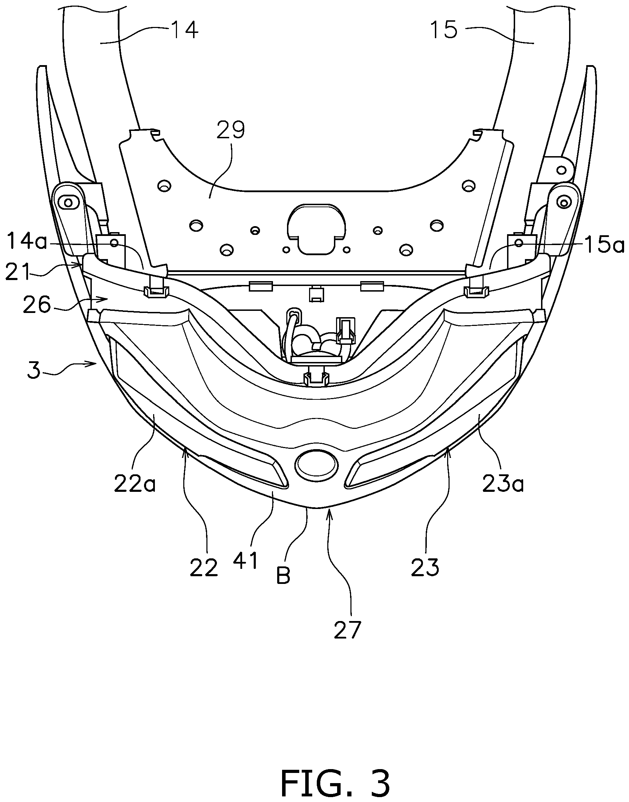

The left and right pair of first lenses 22a and 23a is a pair of outer lenses for the left and right pair of taillights 22 and 23. The left and right pair of first lenses 22a and 23a is exposed through the tail cover 27. The left and right pair of first lenses 22a and 23a each extends in the vehicle width direction. The left and right pair of first lenses 22a and 23a each extends to the vehicle front side and a vehicle upper side in the vehicle side view. The left and right pair of first lenses 22a and 23a each has a larger dimension in the vehicle width direction than in the vehicle up-and-down direction. As shown in FIG. 3, the left and right pair of first lenses 22a and 23a is visible in the vehicle plan view. The left and right pair of first lenses 22a and 23a is visible in the vehicle rear view.

The left and right pair of first lenses 22a and 23a is composed of a lens 22a and a lens 23a. For easy understanding of explanation, the lens 22a will be hereinafter referred to as a first lens 22a, whereas the lens 23a will be referred to as a second lens 23a.

The first lens 22a is remote from the second lens 23a in the vehicle width direction. The first lens 22a is the outer lens for the first taillight 22. In other words, the first taillight 22 includes the first lens 22a. The first lens 22a enables light, emitted from the light source of the first taillight 22, to transmit therethrough. The first lens 22a has a larger dimension in the vehicle width direction than in the vehicle up-and-down direction.

The second lens 23a is the outer lens for the second taillight 23. In other words, the second taillight 23 includes the second lens 23a. The second lens 23a enables light, emitted from the light source of the second taillight 23, to transmit therethrough. The second lens 23a is shaped bilaterally symmetric to the first lens 22a.

The left and right pair of flashers 24 and 25 is disposed below the left and right pair of taillights 22 and 23. The left and right pair of flashers 24 and 25 is fixed to the support member 21.

The left and right pair of flashers 24 and 25 is composed of a first flasher 24, a second flasher 25, and a left and right pair of second lenses 24a and 25a. The first flasher 24 is disposed below the first taillight 22. The second flasher 25 is disposed below the second taillight 23. The second flasher 25 is shaped bilaterally symmetric to the first flasher 24. Each of the first and second flashers 24 and 25 includes a light source, a light guide body, and an inner lens, all of which are not shown in the drawings.

The left and right pair of second lenses 24a and 25a is a pair of outer lenses for the left and right pair of flashers 24 and 25. The left and right pair of second lenses 24a and 25a is exposed through the tail cover 27. The left and right pair of second lenses 24a and 25a each extends in the vehicle up-and-down direction. The left and right pair of second lenses 24a and 25a each extends to the vehicle front side and a vehicle lower side in the vehicle side view. The left and right pair of second lenses 24a and 25a is remote from the left and right pair of first lenses 22a and 23a in the vehicle up-and-down direction. As shown in FIG. 3, the left and right pair of second lenses 24a and 25a is invisible in the vehicle plan view. The left and right pair of second lenses 24a and 25a is visible in the vehicle rear view.

In the vehicle rear view, the left and right pair of second lenses 24a and 25a each has a larger dimension in the vehicle up-and-down direction than in the vehicle width direction. In the vehicle rear view, each of the left and right pair of second lenses 24a and 25a has a larger dimension than each of the left and right pair of first lenses 22a and 23a in the vehicle up-and-down direction. In the vehicle rear view, each of the left and right pair of second lenses 24a and 25a has a smaller dimension than each of the left and right pair of first lenses 22a and 23a in the vehicle width direction.

The left and right pair of second lenses 24a and 25a is composed of a lens 24a and a lens 25a. For easy understanding of explanation, the lens 24a will be hereinafter referred to as a third lens 24a, whereas the lens 25a will be referred to as a fourth lens 25a.

The third lens 24a is remote from the fourth lens 25a in the vehicle width direction. The third lens 24a is the outer lens for the first flasher 24. In other words, the first flasher 24 includes the third lens 24a. The third lens 24a enables light, emitted from the light source of the first flasher 24, to transmit therethrough. The third lens 24a is disposed below the first lens 22a. The third lens 24a is remote from the first lens 22a in the vehicle up-and-down direction. In the vehicle rear view, the third lens 24a has a larger dimension in the vehicle up-and-down direction than in the vehicle width direction. In the vehicle rear view, the first lens 22a extends further outward than the third lens 24a in the vehicle width direction. The first lens 22a extends further inward than the third lens 24a in the vehicle width direction.

The fourth lens 25a is the outer lens for the second flasher 25. In other words, the second flasher 25 includes the fourth lens 25a. The fourth lens 25a enables light, emitted from the light source of the second flasher 25, to transmit therethrough. The fourth lens 25a is shaped bilaterally symmetric to the third lens 24a.

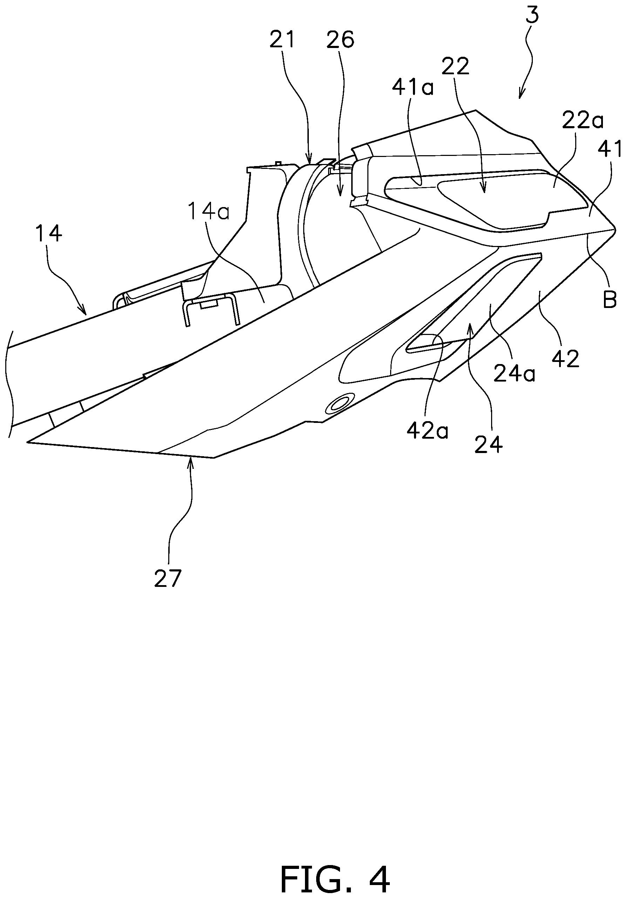

As shown in FIGS. 4 and 5, the first and third lenses 22a and 24a are visible in a vehicle left side view. The second and fourth lenses 23a and 25a are invisible in the vehicle left side view.

The outer lens 26 is connected to the support member 21. The outer lens 26 is disposed behind the support member 21. The outer lens 26 overlaps with the rear ends 14a and 15a of the seat frames 14 and 15 in the vehicle plan view. The outer lens 26 enables the light emitted from the left and right pair of taillights 22 and 23 and that emitted from the left and right pair of flashers 24 and 25 to transmit therethrough.

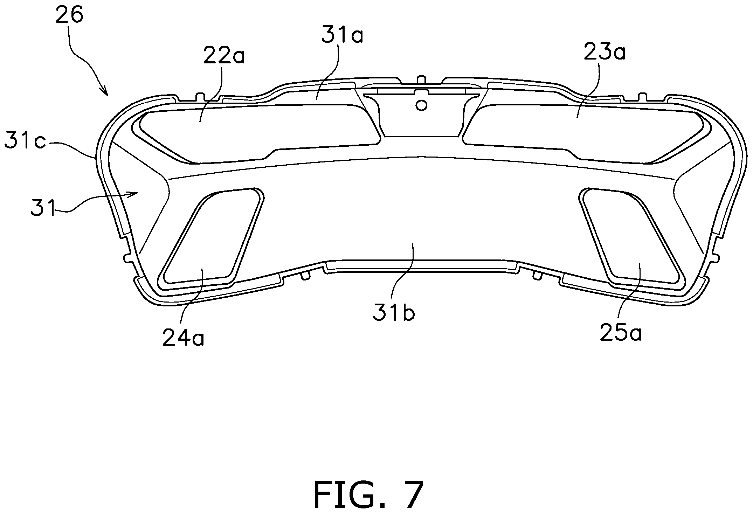

FIG. 7 is a rear view of the outer lens 26. The outer lens 26 includes a body 31, the left and right pair of first lenses 22a and 23a, and the left and right pair of second lenses 24a and 25a. The body 31 is fixed to the support member 21. The body 31 includes an upper slope 31a, a lower slope 31b, and a contact surface 31c coming in contact with the seal surface 21a. The upper slope 31a extends to the vehicle front side and the vehicle upper side in the vehicle side view. The lower slope 31b extends to the vehicle front side and the vehicle lower side in the vehicle side view. The body 31 is shaped to be bent between the upper and lower slopes 31a and 31b.

The contact surface 31c is fixed to the seal surface 21a, while in close contact therewith. The contact surface 31c is shaped along the outer edge of the body 31.

The left and right pair of first lenses 22a and 23a is disposed in the upper slope 31a. The left and right pair of second lenses 24a and 25a are disposed in the lower slope 31b.

The left and right pair of first lenses 22a and 23a and the left and right pair of second lenses 24a and 25a are fixed to be integrated with each other. The left and right pair of first lenses 22a and 23a and the left and right pair of second lenses 24a and 25a are fixed to the body 31. The left and right pair of first lenses 22a and 23a and the left and right pair of second lenses 24a and 25a are fixed to the body 31 by, for instance, insert molding.

The tail cover 27 covers the taillight unit 3 from the vehicle rear side. The tail cover 27 is disposed behind the left and right pair of taillights 22 and 23 and the left and right pair of flashers 24 and 25. The tail cover 27 is disposed behind the outer lens 26. The tail cover 27 is fixed to, for instance, the vehicle body cover 10.

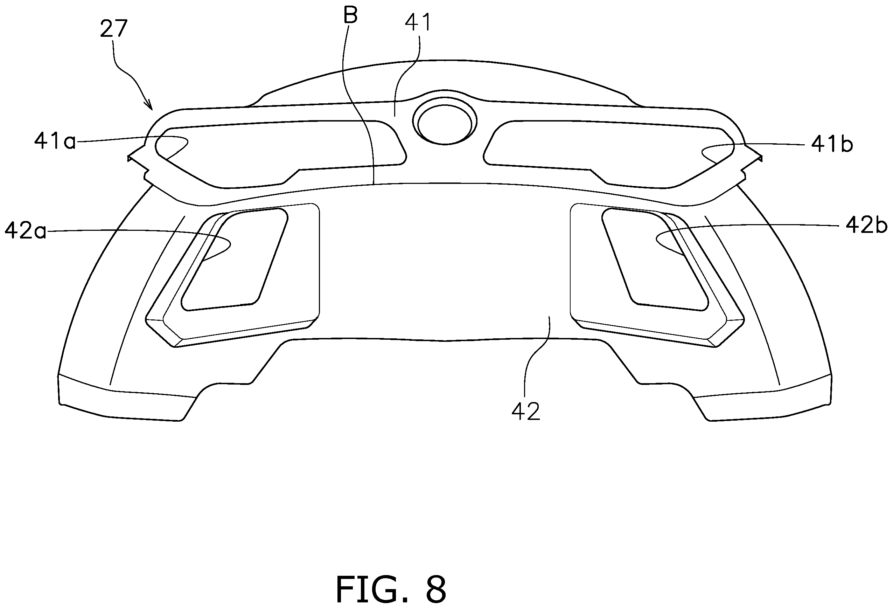

FIG. 8 is a rear view of the tail cover 27. The tail cover 27 is shaped along the form of the outer lens 26. The tail cover 27 is shaped to be gradually reduced in vehicle width directional dimension toward the vehicle rear side.

The tail cover 27 includes an upper slope 41 and a lower slope 42. The upper slope 41 extends to the vehicle front side and the vehicle upper side in the vehicle side view. The upper slope 41 slants up to the front in the vehicle side view. The upper slope 41 covers the upper slope 31a of the outer lens 26.

The upper slope 41 includes a first opening 41a and a second opening 41b. The first and second openings 41a and 41b are opened to the vehicle upper side and the vehicle rear side. The first opening 41a is an opening for exposing the first taillight 22 therethrough. The first taillight 22 is exposed through the first opening 41a. The first lens 22a is exposed through the first opening 41a.

The second opening 41b is disposed apart from the first opening 41a in the vehicle width direction. The second opening 41b is shaped bilaterally symmetric to the first opening 41a. The second opening 41b is an opening for exposing the second taillight 23 therethrough. The second taillight 23 is exposed through the second opening 41b. The second lens 23a is exposed through the second opening 41b.

The lower slope 42 extends to the vehicle front side and the vehicle lower side in the vehicle side view. The lower slope 42 slants down to the front in the vehicle side view. The lower slope 42 covers the lower slope 31b of the outer lens 26. The rear end of the lower slope 42 is connected to that of the upper slope 41. The lower slope 42 overlaps with the upper slope 41 in the vehicle plan view.

The lower slope 42 includes a third opening 42a and a fourth opening 42b. The third and fourth openings 42a and 42b are opened to the vehicle lower side and the vehicle rear side. The third opening 42a is disposed apart from the first opening 41a in the vehicle up-and-down direction. The third opening 42a is an opening for exposing the first flasher 24 therethrough. The first flasher 24 is exposed through the third opening 42a. The third lens 24a is exposed through the third opening 42a.

The fourth opening 42b is disposed apart from the third opening 42a in the vehicle width direction. The fourth opening 42b is remote from the second opening 41b in the vehicle up-and-down direction. The fourth opening 42b is shaped bilaterally symmetric to the third opening 42a. The fourth opening 42b is an opening for exposing the second flasher 25 therethrough. The second flasher 25 is exposed through the fourth opening 42b. The fourth lens 25a is exposed through the fourth opening 42b.

In the vehicle plan view, a boundary B between the upper and lower slopes 41 and 42 is located further on the vehicle rear side than the left and right pair of first lenses 22a and 23a and the left and right pair of second lenses 24a and 25a.

The first taillight 22 has a light emitting surface larger than that of the first flasher 24. The light emitting surface of the first taillight 22 exposed through the first opening 41a is larger than that of the first flasher 24 exposed through the third opening 42a. The light emitting surface of the first taillight 22 is the exposed surface of the first lens 22a, i.e., a part of the surface thereof exposed through the first opening 41a. The light emitting surface of the first flasher 24 is the exposed surface of the third lens 24a, i.e., a part of the surface thereof exposed through the third opening 42a. As shown in FIG. 2, in the vehicle rear view, the part exposed through the first opening 41a in the first lens 22a has an area larger than that of the part exposed through the third opening 42a in the third lens 24a.

As shown in FIG. 6, the partitioning wall 28 divides the internal space of the taillight unit 3. The first taillight 22, the second taillight 23, the first flasher 24, and the second flasher 25 are partitioned off from each other by the partitioning wall 28 in the interior of the taillight unit 3. The partitioning wall 28 inhibits interference of light from the light sources of the first taillight 22, the second taillight 23, the first flasher 24, and the second flasher 25. The partitioning wall 28 is provided at least in part on the support member 21.

The partitioning wall 28 includes a first partitioning wall 28a, a second partitioning wall 28b, and a third partitioning wall 28c. The first partitioning wall 28a extends in the vehicle back-and-forth direction and the vehicle up-and-down direction. The first partitioning wall 28a is disposed between the first taillight 22 and the second taillight 23. The first partitioning wall 28a is disposed between the first flasher 24 and the second flasher 25. The first taillight 22 is partitioned off from the second taillight 23 by the first partitioning wall 28a in the interior of the taillight unit 3. The first flasher 24 is partitioned off from the second flasher 25 by the first partitioning wall 28a in the interior of the taillight unit 3.

The second and third partitioning walls 28b and 28c extend in the vehicle back-and-forth direction and the vehicle width direction. The second partitioning wall 28b is disposed between the first taillight 22 and the first flasher 24. The first taillight 22 is partitioned off from the first flasher 24 by the second partitioning wall 28b in the interior of the taillight unit 3. The third partitioning wall 28c is disposed between the second taillight 23 and the second flasher 25. The second taillight 23 is partitioned off from the second flasher 25 by the third partitioning wall 28c in the interior of the taillight unit 3.

In the taillight unit 3 for the straddled vehicle 1, the tail cover 27 is shaped to be bent between the upper slope 41 and the lower slope 421; besides, the left and right pair of taillights 22 and 23 is exposed through the first and second openings 41a and 41b of the upper slope 41, while the left and right pair of flashers 24 and 25 is exposed through the third and fourth openings 42a and 42b of the lower slope 42.

Because of this, when compared to, for instance, a configuration that the left and right pair of taillights 22 and 23 and the left and right pair of flashers 24 and 25 are provided as four units discrete from each other, the taillight unit 3 can be made efficient in structure, and hence, can be enhanced in design flexibility. Furthermore, even if the left and right pair of taillights 22 and 23 and the left and right pair of flashers 24 and 25 are disposed close in position to each other, the light from the taillights 22 and 23 and that from the flashers 24 and 25 can be inhibited from interfering with each other. As a result, the taillight unit 3 can be made compact, and simultaneously, degradation in visibility of the left and right pair of taillights 22 and 23 and the left and right pair of flashers 24 and 25 can be inhibited.

The left and right pair of taillights 22 and 23 is exposed from the upper slope 41; hence, the left and right pair of taillights 22 and 23 is enhanced in visibility when seen from the vehicle rear side. The left and right pair of flashers 24 and 25 is exposed from the lower slope 42 unlikely to be cast by external light; hence, the left and right pair of flashers 24 and 25 is enhanced in visibility. Furthermore, the first taillight 22 is larger in light emitting surface than the first flasher 24; hence, even if the first flasher 24 is disposed in a shaded position, the first flasher 24 can be reliably viewed with distinction.

One preferred embodiment of the present invention has been explained above. However, the present invention is not limited to the preferred embodiment described above, and a variety of changes can be made without departing from the gist of the present invention.

The straddled vehicle 1 may be a vehicle of another type such as a sport type, a street type, an off-road type, or a moped type.

The taillight unit 3 may be changed in structure. The support member 21 and the outer lens 26 may be changed in shape. The seal surface 21a may be changed in positional arrangement or shape. The first opening 41a, the second opening 41b, the third opening 42a, and the fourth opening 42b may be changed in shape.

### REFERENCE SIGNS LIST

1: Straddled vehicle, 3: taillight unit, 22, 23: Left and right pair of taillights, 22: First taillight, 23: Second taillight, 24, 25: Left and right pair of flashers, 24: First flasher, 25: Second flasher, 27: Tail cover, 41: Upper slope, 42: Lower slope, 41a: First opening, 41b: Second opening, 42a: Third opening, 42b: Fourth opening, 22a, 23a: Left and right pair of first lenses, 24a, 25a: Left and right pair of second lenses

## Claims

1. A taillight unit (3) for a straddled vehicle (1), the taillight unit (3) comprising:
a left and right pair of taillights (22,23) including a first taillight (22) and a second taillight (23);
a left and right pair of flashers (24, 25) including a first flasher (24) and a second flasher (25); and
a tail cover (27) disposed behind the left and right pair of taillights (22, 23) and the left and right pair of flashers (24, 25), the tail cover (27) including an upper slope (41) and a lower slope (42), the tail cover (27) being shaped to be bent between the upper slope (41) and the lower slope (42), the upper slope (41) extending toward a vehicle front side and a vehicle upper side in a vehicle side view, the lower slope (42) extending toward the vehicle front side and a vehicle lower side in the vehicle side view, wherein
the upper slope (41) of the tail cover (27) includes:
a first opening (41a) through which the first taillight (22) is exposed; and
a second opening (41b) through which the second taillight (23) is exposed, the second opening (41b) being disposed apart from the first opening (41a) in a vehicle width direction, the lower slope (42) of the tail cover (27) includes:
a third opening (42a) through which the first flasher (24) is exposed, the third opening (42a) being disposed apart from the first opening (41a) in a vehicle up-and-down direction, and
a fourth opening (42b) through which the second flasher (25) is exposed, the fourth opening (42b) disposed apart from the third opening in the vehicle width direction, and
the first taillight (22) is larger in light emitting surface than the first flasher (24).

2. The taillight unit according to claim 1, wherein
the left and right pair of taillights (22, 23) includes a left and right pair of first lenses (22a, 23a),
the left and right pair of flashers (24, 25) includes a left and right pair of second lenses (24a, 25a), and
the left and right pair of first lenses (22a, 23a) and the left and right pair of second lenses (24a, 25a) are fixed to be integrated with each other.

3. The taillight unit according to claim 2, wherein
each of the left and right pair of first lenses (22a, 23a) has a larger dimension in the vehicle width direction than in the vehicle up-and-down direction in a vehicle rear view, and
each of the left and right pair of second lenses (24a, 25a) has a larger dimension in the vehicle up-and-down direction than in the vehicle width direction in the vehicle rear view.

4. A straddled vehicle (1) comprising the taillight unit (3) recited in any one of claims 1 to 3.
